# EUROPÄISCHE PATENTANMELDUNG

(11) **EP 3 851 227 A1**
(43) Veröffentlichungstag der Anmeldung: **21.07.2021**
(21) Anmeldenummer: 21020014.3
(22) Anmeldetag: 13.01.2021
(51) Int. Cl.: B22F 10/28, B22F 12/41, B33Y 10/00, B33Y 80/00, C22C 5/00, B23K 26/342

(54) **VERFAHREN ZUR ADDITIVEN FERTIGUNG EINES DREIDIMENSIONALEN KÖRPERS AUS EINEM METALLPULVER SOWIE EIN DERARTIG HERGESTELLTER KÖRPER**

(30) Priorität: 17.01.2020 DE 102020000247; 17.01.2020 DE 202020000175 U
(71) Anmelder: C. Hafner GmbH + Co. KG, 71299 Wimsheim (DE)
(72) Erfinder: Heinrich, Jochen, 71299 Wimsheim (DE); Hünsche, Ingwar, 71299 Wimsheim (DE); Schenzel, Heinz-Günter, 71299 Wimsheim (DE)
(74) Vertreter: Leitner, Waldemar

(57) **Zusammenfassung**

Die Erfindung betrifft ein Verfahren zur Herstellung eines dreidimensionalen Körpers aus einem edelmetallhaltigen Pulver, bei dem eine Pulverschicht auf einen Träger aufgetragen und mittels eines Lasers selektiv derjenige Bereich der aufgetragenen Pulverschicht, die der jeweiligen Schichtgeometrie des herzustellenden Körpers entspricht, aufgeschmolzen wird, und bei dem sukzessive weitere Pulverschichten des edelmetallhaltigen Pulvers aufgetragen und diejenigen Bereiche der aufgetragenen Pulverschicht, die der jeweiligen Schichtgeometrie des herzustellenden dreidimensionalen Körpers entsprechen, aufgeschmolzen werden.

Erfindungsgemäß ist vorgesehen, dass zum selektiven Aufschmelzen mindestens einer und vorzugsweise aller Pulverschichten ein Laser verwendet wird, dessen Laserstrahl eine Wellenlänge zwischen 490 nm und 570 nm, vorzugsweise zwischen 500 nm und 560 nm, weiter vorzugsweise zwischen 515 nm bis 535 nm und insbesondere vorzugsweise 515 nm oder 535 nm besitzt.

## Beschreibung

Die Erfindung betrifft ein Verfahren zur additiven Fertigung eines dreidimensionalen Körpers aus einem edelmetallhaltigen Pulver, bei dem die einzelnen Partikeln dieses Metallpulvers durch einen Laserstrahl verschmolzen werden, die Verwendung eines edelmetallhaltigen Pulvers in einem additiven Fertigungsverfahren zur Herstellung eines dreidimensionalen Körpers sowie einen durch ein additives Fertigungsverfahren hergestellten dreidimensionalen Körper.

Additive Fertigungsverfahren sind bekannt. Die DE 10 2017 212 182 A1 beschreibt z. B. ein Verfahren zur Herstellung eines Bauteils aus einem Edelmetall durch ein selektives Laserschmelzen, bei dem eine Pulverschicht auf einer Substratplatte aufgetragen und anschließend derjenige Bereich der aufgetragenen Pulverschicht, die der jeweiligen Schichtgeometrie des herzustellenden Körpers entspricht, selektiv mittels eines Lasers geschmolzen wird. Dann wird eine weitere Pulverschicht des Edelmetalls aufgetragen und wiederum derjenige Bereich der aufgetragenen Pulverschicht, die nun der Schichtgeometrie des herzustellenden Körpers entspricht, aufgeschmolzen. Der vorgenannte Schritt wird solange wiederholt, bis der herzustellende dreidimensionale Körper derart additiv hergestellt ist.

Additive Herstellungsverfahren werden unter anderem zur Herstellung von Luxusgütern wie aus Edelmetall oder Edelmetall-Legierungen bestehenden Schmuckstücken, Uhrengehäusen, Schreibgeräten oder Teilen davon, um nur einige Beispiele zu nennen, eingesetzt, da sie in einfacher Art und Weise die Herstellung von Edelmetallprodukten mit einer komplexen Geometrie erlauben, indem in an und für sich bekannter Art und Weise das entsprechende Bauteil durch einen schichtweisen Auftrag von edelmetallhaltigen Partikeln hergestellt wird. Z. B. beschreibt die EP 1 677 930 B1 ein Verfahren zur Herstellung von Schmuck und anderen Edelmetallprodukten mit komplexen Geometrien aus einem edelmetallhaltigen Pulvermaterial, wobei das Pulvermetall durch die Beaufschlagung mit einem Laserstrahl mindestens einer Teilschmelze unterzogen wird, welche zu einem Binden der Schicht mit der unmittelbar vorangehenden Schicht führt. Die Wellenlänge des hierbei verwendeten Lasers beträgt 1070 nm. Das Pulvermaterial ist eine 18-karatige Goldlegierung, die 60-80 Gew.-% Gold, 0-15 Gew.-% Silber, 5-15 Gew.-% Kupfer, 5-25 Gew.-% Zinn und 0,0-2 Gew.-% Phosphor enthält. Die Porosität des damit hergestellten dreidimensionalen Körpers ist geringer als 10 Vol.-%.

Die EP 3 142 814 B1 beschreibt die Verwendung von Goldpulver-Legierungen zur Herstellung von Schmuckstücken durch ein selektives Laserschmelzen. In der vorgenannten Druckschrift wird eine Vielzahl von Gelb- oder Rot- oder Weißgoldpulver-Legierungen vorgestellt, die 18 Karat, 14 Karat, 10 Karat oder 9 Karat Gold enthalten. Die Leistung des hierbei eingesetzten Lasers beträgt mindestens 70 Watt und die Wellenlänge beträgt 1070 nm. Die aus den vorgenannten Pulvern hergestellten Schmuckstücke weisen eine Porosität von kleiner gleich 2 Vol.-% auf.

Ein entscheidendes Qualitätskriterium bei Schmuckstücken wie Schmuck, Uhrengehäusen, Schreibgeräten oder Teilen davon ist eine weitgehend defektfreie Oberfläche und ein makelloser Glanz der polierten Bereiche der vorgenannten Artikel. Eine wesentliche Voraussetzung, dies zu erreichen, ist, dass die Dichte des durch ein selektives Laserschmelzen hergestellten Körpers größer gleich 99,9 Vol.-% ist und dass die maximale Defektgröße kleiner gleich 30 µm ist. Diese Voraussetzungen sind mit Standard-Edelmetall-Legierungen und den bekannten Verfahren zur additiven Fertigung, bei denen ein Laser mit einer Wellenlänge von 1070 nm eingesetzt wird, nur schwer oder nicht zu erreichen.

Es wurde daher z. B. in der EP 3 216 545 B1 vorgeschlagen, den bei der additiven Fertigung verwendeten Metallpulvern Additive zuzugeben, um die Energieabsorption der im Pulverbett zu verschmelzenden Edelmetallpartikel zu verbessern. Eine derartige Maßnahme führt zwar dazu, dass die einzelnen Pulverpartikel besser verschmelzen, wodurch eine höhere Dichte des aus den edelmetallhaltigen Pulverpartikeln hergestellten dreidimensionalen Körpers folgt. Nachteilig daran ist aber, dass die Verbesserung bei der Materialqualität zu Farbänderungen führt.

Die Farbe eines aus Edelmetall-Partikeln hergestellten dreidimensionalen Körpers ist aber insbesondere in der Schmuck- und Uhrenindustrie von großer Bedeutung. Die Hersteller derartiger Luxusartikel verlangen von den Produzenten der bei der additiven Fertigung derartiger Luxusartikel eingesetzten Edelmetall-Pulver, dass der daraus hergestellte dreidimensionale Körper eine definierte Farbe gemäß der ISO-Norm 8654 (2018) besitzt. Die vorstehend angesprochene Zugabe von Additiven, insbesondere von metallischen Zusatzstoffen, kann in nachteiliger Art und Weise dazu führen, dass der durch ein Laserverschmelzen dieses Pulvers hergestellte dreidimensionale Körper dann nicht mehr die gewünschte Norm-Farbe aufweist, sondern nur eine hierzu ähnliche. Dies ist insbesondere bei Schmuckstücken von Nachteil, da bei derartigen hochwertigen Produkten die Farbe eines derartigen Schmuckstücks eine große Rolle spielt. Insbesondere deshalb werden Farbabweichungen in der Regel insbesondere im Luxusgüter-Bereich nicht akzeptiert.

Ein weiterer Nachteil bei der Verwendung von Additiven zur Erhöhung der Effizienz des additiven Fertigungsverfahrens besteht darin, dass das mit einem Additiv versehene Edelmetallpulver unter Umständen nicht mehr punzierfähig ist, d. h. nicht den Standards entspricht, die z. B. eine 14-karätige, eine 18-karätige, eine 24-karätige Goldlegierung oder z. B. eine mindestens 95 Gew.-% Platin aufweisende Platinlegierung (Pt950) erfüllen. Es ist daher für jedes mit einem derartigen Additiv veränderte Edelmetallpulver ein neues Validierungsverfahren erforderlich, um zu evaluieren, ob eine Punzierfähigkeit eventuell gegeben ist.

Als Beispiel für ein derartige Additive verwendendes Verfahren wird auf die US 2015/0328835 A1 hingewiesen. Aus dieser Druckschrift ist ein Verfahren zum Herstellen eines dreidimensionalen Objekts durch eine additive Fertigung bekannt, bei dem zum Drucken dieses Objekts mittels eines 3D-Druckers ein Material verwendet wird, welches eine Vielzahl von metallischen Partikeln mit einer durchschnittlichen Querschnittsgröße von gleich oder kleiner 100 nm, also aus Nanopartikel besteht, aufweist. Diesem Grundmaterial des zum Drucken verwendeten Nanopulvers sind stabilisierende Additive beigefügt, welche z. B. ein Organoamin, eine Carbonsäure, Thiole und ihre Derivate Xantogensäure, Polyethylenglykole, ein Polyvinylpyridin, ein Polyvinylpyrolidon oder eine Mischung desselben enthalten. Diese stabilisierenden Zusätze dienen dazu, um eine stabilisierte Nanopartikel-Matrix auszubilden. Als bevorzugtes Beispiel für die vorgenannten metallischen Partikel werden Gold, Silber, Aluminium, Platin, Palladium, Kupfer, Kobalt, Chrom, Indium, Titan, Zirkonium, Nickel oder eine Legierung oder eine Kombination davon angegeben. Die derart stabilisierten Metallpartikel werden mit einer Temperatur von weniger oder gleich 200° Grad gesintert, wobei das Sintern durch eine Vielzahl von Lichtimpulsen durchgeführt wird.

Als weiteres Beispiel für ein Additive verwendendes Verfahren ist die DE 60 2004 010 296 T2 zu erwähnen. Diese Druckschrift beschreibt die Herstellung von Edelmetallprodukten durch eine Freiformherstellung in der Gestalt von Kunstobjekten mit speziellen Designs und komplexen Geometrien einschließlich solcher, welche aus mehreren unterbrochenen Teilen bestehen können, welche untrennbar, jedoch flexibel, aneinander gekoppelt sind, wie z. B. Halsketten, Armbänder, anderer Schmuck, unterschiedliche Arten von dekorativen Ketten oder dergleichen bestimmt. Hierzu wird eine Metallpulvermischung verwendet, welche von einem Grundmaterial ausgeht, dessen Edelmetallgehalt hinreichend groß ist, damit es entsprechend den bestehenden Gesetzen Feingehalt-gekennzeichnet werden können. Dieser Ausgangs-Metallpulvermaterialmischung mit einem Gesamt-Edelmetallgehalt von mindestens 50 Gew.-% wird eine metallische Komponente zugesetzt, welche während der Herstellung des Produkts aufgeschmolzen wird und welche in der geschmolzenen Phase andere in der Pulvermischung enthaltene Komponenten benetzt. Das verwendete Pulver weist eine Pulvergröße, Pulvergestalt und andere Eigenschaften auf, die für das Freiformfabrikationsverfahren eingestellt sind, wobei innerhalb des Pulvers mindestens ein metallisches Element vorhanden ist, welches eine größere Affinität gegenüber Sauerstoff aufweist als Kupfer und eine eingebaute Flusswirkung auf die Schmelze liefert, welche aus dem Pulver ausgebildet ist. Bevorzugt wird, dass die Metallpulvermischung mindestens zwei unterschiedliche Pulvermaterialien besitzt, von denen eines (das Lotmaterial) einen niedrigeren Schmelzpunkt aufweist, der hinreichend niedrig für das vollständige Aufschmelzen des Materials durch einen Laserstrahl oder einen Elektronenstrahl ist, der im Zusammenhang mit dem vorgenannten Freiformfabrikationsverfahren verwendet wird, und in dem geschmolzenen Zustand das Pulvermaterial mit dem höheren Schmelzpunkt (das Grundmaterial) benetzt, wobei das Pulvermaterial mit dem höheren Schmelzpunkt 60-90% der gesamten Pulvermenge ausmacht. Es wird gemäß der technischen Lehre dieser Druckschrift bevorzugt, dass das Grundmaterial, in Reinform oder in Legierungsform, aus einem oder mehreren der Edelmetalle Gold, Silber, Platin oder Palladium mit einem Gesamtgehalt von mindestens 50 % zusammensetzt, wobei insbesondere das Grundmaterial aus einem Pulver mit einem 14-18-karätigen Gehalt von Gold besteht. Das Lotmaterial weist mindestens ein Pulvermaterial auf, dessen Gesamtgehalt an Edelmetall mindestens 50 % beträgt und dessen Schmelzpunkt mindestens 50° Celsius niedriger liegt als jenes des Grundmaterials. Zum Aufschmelzen der Pulvermaterialmischung wird ein SLS-Verfahren (SLS = Selektives Lasersintern) verwendet. Durch den Laserstrahl oder Elektronenstrahl wird jede Pulverschicht die aufgetragen wird, in sich selbst und mit der vorangehenden Pulverschicht gesintert oder verbunden. Bei der Laser- oder Elektronenstrahlbeaufschlagung wird zuerst der niedriger schmelzende Pulvertyp, also das Lotmaterial, unter dem Einfluss des Lasers aufgeschmolzen und verbindet dadurch das höher schmelzende Grundmaterial. Um die Restporosität des fertigen Produkts zu verringern, wird bevorzugt, dass Teile des verbleibenden Pulvermaterials ebenfalls in diesem Zusammenhang geschmolzen werden. In der Regel muss dann nach dem tatsächlichen Produkt-erzeugenden Herstellungsvorgang eine Wärmebehandlung oder eine andere Nachbehandlung folgen.

Aus der EP 2 991 799 B1 ist ein System und ein Verfahren für ein dreidimensionales Drucken eines Körpers unter Verwendung einer sichtbares Licht emittierenden Laserlichtquelle bekannt. Das hierzu verwendete Drucksystem umfasst eine Laserlichtquelle und ein Substrat in optischer Kommunikation mit der Laserlichtquelle. Diese erzeugt einen kohärenten Strahl aus sichtbarem Licht, der eine Wellenlänge zwischen 380 nm und 760 nm aufweist und durch eine stimulierte Raman-Steuerung erzeugt wird. Die in der vorgenannten Druckschrift vorgeschlagenen Wellenlängen der verwendeten Laserstrahlung umfassen somit das gesamte Spektrum des sichtbaren Lichts von Violett (380 nm bis 480 nm) bis zu Rot (640 nm bis 780 nm). Die Laserlichtquelle ist einem Scanmodul nachgelagert, welches dazu dient, eine Scanbewegung des kohärenten Strahls aus sichtbarem Licht in Bezug auf das Substrat zu erzeugen, wobei die Scanbewegung einer zuvor festgelegten Form des dreidimensionalen Gegenstands entspricht. Es ist ein Computersteuerungssystem vorgesehen, welches mit der Laserlichtquelle und dem Scanmodul wirkverbunden ist. Dieses ist derart programmiert, um erstens die Scanbewegung auf eine zuvor festgelegte Weise zu steuern und zweitens eine Leistung der Laserlichtquelle zu modulieren, um den Gegenstand aus dem Substrat zu bilden.

Es ist auch bekannt, die durch eine additive Fertigung hergestellten dreidimensionalen Körper einem sog. heißisostatischen Pressen zu unterwerfen. Ein derartiger Vorgang kann zwar zu einer Dichte von nahezu 100 Vol.-% führen. Ein derartiges Pressen ist aber ein aufwendiger Vorgang, welcher die Effizienz des additiven Fertigungsverfahrens nachteilig beeinflusst. Die vorgenannte Wärmebehandlung hat aber auch den Nachteil, dass eine Vergröberung des Metallgefüges auftritt, mit der eine Reduktion der Materialhärte und der Polierbarkeit des durch ein Laserschmelzen aus Edelmetall-Partikeln hergestellten dreidimensionalen Körpers einhergeht.

Es ist daher Aufgabe der vorliegenden Erfindung, ein Verfahren zur additiven Fertigung eines dreidimensionalen Körpers aus einem edelmetallhaltigen Pulver derart zu verbessern, dass ohne die Verwendung von Additiven oder sonstigen Zusatzstoffen eine verbesserte Dichte und eine verringerte Defektgröße des durch das erfindungsgemäße Verfahren hergestellten dreidimensionalen Körpers erzielt wird, sowie die Verwendung eines derartigen Pulvers. Außerdem soll ein aus Edelmetall-Partikeln hergestellter dreidimensionaler Körper vorgeschlagen werden.

Das erfindungsgemäße Verfahren sieht vor, dass die Wellenlänge des beim Laserschmelzen eingesetzten Lasers zwischen 490 nm bis 570 nm ist, vorzugsweise in einem Bereich zwischen 500 nm bis 560 nm, weiter vorzugsweise in einem Bereich zwischen 515 nm bis 535 nm, liegt und der Laserstrahl insbesondere eine Wellenlänge von 515 nm oder 535 nm besitzt.

Der erfindungsgemäße dreidimensionale Körper, insbesondere ein Schmuckgegenstand wie ein Schmuckstück, eine Uhr oder ein Schreibgerät oder Teile davon, zeichnet sich dadurch aus, dass zu seiner Herstellung aus einem edelmetallhaltigen Pulver ein additives Fertigungsverfahren eingesetzt wird, welches einen Laser mit einer wie vorstehend definierten Wellenlänge verwendet.

Überraschenderweise hat sich gezeigt, dass bei der Verwendung eines Lasers, dessen Wellenlänge im Bereich des (sichtbaren) grünen Lichts liegt, also im Bereich zwischen 490 nm bis 570 nm, nicht erwartete Ergebnisse, was die Dichte des mit dem beschriebenen Verfahren hergestellten erfindungsgemäßen Körpers betrifft, ermöglicht. Typische Werte liegen im Bereich von größer gleich 99,9 Vol.-%. Dies stellt signifikante Steigerung der Dichte des durch das erfindungsgemäße additive Fertigungsverfahren hergestellten dreidimensionalen Körpers im Vergleich zu bekannten Verfahren, die einen roten Laser verwenden, dar.

Die erfindungsgemäßen Maßnahmen besitzen den Vorteil, dass mit Standard-Edelmetallpulvern, also mit Edelmetallpulvern, die keine die Absorption des Laserstrahls verbessernden Additive aufweisen, dreidimensionale Körper durch ein selektives Laserschmelzen hergestellt werden können, welche sich dadurch auszeichnen, dass sie eine Dichte von größer gleich 99,9 Vol.-% besitzen. Eine derartige hohe Dichte des mit dem erfindungsgemäßen Verfahren hergestellten dreidimensionalen Körpers bringt in vorteilhafter Art und Weise mit sich, dass auch hohe Anforderungen, wie sie - wie eingangs erläutert - von Herstellern von Luxusartikeln wie Uhren, Schmuck und Schreibgeräten gefordert werden, erfüllt werden. In vorteilhafter Weise ist daher bei einem derartig hergestellten Körper in der Regel keine Nachbearbeitung wie ein heißisostatisches Pressen erforderlich. Da, wie schon ausgeführt, es die erfindungsgemäßen Maßnahmen erlauben, hierzu edelmetallhaltige Pulver einzusetzen, denen keine Additive zur Erhöhung der Energieabsorption beigemischt sind, weisen die mit dem erfindungsgemäßen Verfahren hergestellten dreidimensionalen Körper nicht nur eine hohe Oberflächenqualität auf, es wird auch eine Farbveränderung, die bei den bekannten Verfahren durch den Zusatz von Additiven auftritt oder auftreten kann, vermieden. Ein zusätzlicher Validierungsaufwand, der - wie bereits ebenfalls vorstehend erläutert - auftritt, wenn Standard-Legierungen durch das Hinzufügen von Additiven verändert werden, ist ebenfalls nicht erforderlich. Die erfindungsgemäßen Maßnahmen erlauben daher in vorteilhafter Art und Weise eine effiziente Herstellung von dreidimensionalen Körpern aus Standard-Edelmetallpulver mittels eines additiven Fertigungsverfahrens.

Eine vorteilhafte Weiterbildung der Erfindung sieht vor, dass zur Herstellung des dreidimensionalen Körpers mit dem erfindungsgemäßen additiven Fertigungsverfahren als Pulver ein Pulver verwendet wird, welches Palladium, Platin, Rhodium, Ruthenium und/oder Iridium oder Silber oder Gold, und zwar jeweils ohne Additive oder Zusatzstoffe, enthält.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden beschrieben werden. Der Gehalt der Edelmetalle in den nachstehend beschriebenen Legierungen entspricht der Norm ISO 9202.

Das erste Ausführungsbeispiel eines additiven Verfahrens zur Herstellung eines dreidimensionalen Körpers mittels eines selektiven Laserschmelzens eines edelmetallhaltigen Pulvers basiert auf einer Goldlegierung. Diese weist im hier beschriebenen Ausführungsbeispiel 75 Gew.-% Gold und Kupfer und Silber in einem Anteil von zusammen 25 Gew.-% auf. Es handelt sich also hierbei um eine 18-karätige Goldlegierung. Bei einer derartigen Goldlegierung ist, um punzierfähig zu sein, ein Goldgehalt von 75 Gew.-% vorgeschrieben. Der Anteil von Kupfer und Silber wird in Abhängigkeit von der gewünschten Farbe des Materials gewählt. Ein Repräsentant einer derartigen Goldlegierung ist z. B. eine Goldlegierung, die 75 Gew.-%, 20 Gew.-% Kupfer und 5 Gew.-% Silber aufweist. Eine derartige Legierung entspricht einer 5N-Legierung gemäß der vorgenannten ISO 8654.

Die bei dem additiven Fertigungsverfahren eingesetzte Goldlegierung des ersten Ausführungsbeispiels weist eine Größenverteilung der Pulverpartikel auf, die zwischen d₁₀=10 µm und d₉₀=50 µm liegt. Das additive Verfahren wurde auf einer Maschine des Herstellers Trumpf des Typs TruPrint 1000 durchgeführt.

Ein Testkörper, der in bekannter Art und Weise durch das additive Laserverschmelzen der Pulverpartikel der beschriebenen Goldlegierung unter Verwendung eines Lasers mit einer Wellenlänge von 1070 mn hergestellt wurde, weist eine Materialdichte von 99,50-99,90 Vol.-% auf, wobei die Fertigung bei einer maximalen Laserenergie von 150 W und einer daraus resultierenden Volumenenergie von 325 J/mm³ durchgeführt wurde.

Ein Testkörper, der bei vergleichbaren Prozessbedingungen, aber mit einem Laser, der eine Wellenlänge von 535 nm oder eine Wellenlänge von 515 nm verwendet, hergestellt wurde, weist eine Materialdichte von 99,97 +/- 0,02 Vol.-% auf. Die Verwendung einer Laserstrahlung mit einer Wellenlänge von 535 nm bzw. 515 nm führt also zu einer signifikanten Steigerung der Dichte des durch das additive Fertigungsverfahren hergestellten Testkörpers, wobei die maximale Defektgröße kleiner gleich 30 µm ist.

Vergleichbare Werte ergeben sich bei einer Goldlegierung, die 75 Gew.-% Gold, 5-12,5 Gew.-% Silber und 12,5-20 Gew.-% Kupfer aufweist, sowie bei einer Goldlegierung, die 75 Gew.-% Gold, 13-15 Gew.-% Palladium und 10-12 Gew.-% anderer Metalle aufweist. Auch bei einer 14-karätigen Goldlegierung, die 58,5 Gew.-% Gold, 10-34,5 Gew.-% Silber und 7-40,5 Gew.-% Kupfer aufweist, ist eine deutlich verbesserte Dichte des aus den vorgenannten Legierungen gefertigten massiven Körpers gegeben.

Das beschriebene Verfahren ist nicht nur bei 14- oder 18-karätigen Goldlegierungen, sondern auch beispielsweise bei 8- bis 22-karätigen Goldlegierungen anwendbar. Auch bei Goldlegierungen anderer Zusammensetzung ist eine erhöhte Dichte des aus der entsprechenden Legierung mittels eines additiven Laserschmelzverfahrens gefertigten Körpers gegeben.

Das zweite Ausführungsbeispiel zur Herstellung eines dreidimensionalen Körpers mittels eines additiven Fertigungsverfahrens geht von einem Pulver einer Platinlegierung aus, die 95 Gew.-% Platin und 5 Gew.-% Kupfer aufweist. Es wurde ein konventionelles Laserschmelzverfahren mit der vorgenannten Maschine durchgeführt. Körper, die mit einer Wellenlänge des verwendeten Laserstrahls von 1070 nm hergestellt wurden, wiesen Materialdichten von 99,90 Vol.-% auf. Dahingegen wiesen Testkörper, die bei ansonsten gleichen Verfahrensbedingungen mit einer Laser-Wellenlänge von 535 nm bzw. 515 nm hergestellt wurden, Materialdichten von 99,94 +/- 0,03 Vol.-% auf, wobei die maximal genutzte Laserleistung bzw. Scangeschwindigkeit bis zu 450 W bzw. 600 mm/s betrugen, was in einer eingebrachten Volumenenergie von bis zu 170 J/mm³ resultiert.

Ähnliche Werte ergeben sich bei einer Verwendung von Pulverpartikeln aus einer Legierung, die 95 Gew.-% Platin und 5 Gew.-% Ruthenium oder 95 Gew.-% Platin und 5 Gew.-% Kobalt oder 95 Gew.-% Platin, 3 Gew.-% Gallium und 2 Gew.-% Kupfer oder 95 Gew.-% Platin, 2 Gew.-% Gold und der Rest bestehend aus anderen Metallen sowie 95 Gew.-% Platin, 1,5 Gew.-% Gold, 1 Gew.-% Ruthenium und als Rest andere Metalle enthält.

Das beschriebene Verfahren ist aber nicht auf eine Legierung mit 95 Gew.-% Platin beschränkt, vielmehr sind auch andere Platinlegierungen z. B. eine Legierung mit 85 Gew.-% Platin, bei dem beschriebenen additiven Fertigungsverfahren einsetzbar.

Gleiches gilt für die weiteren Platingruppenmetalle, insbesondere für Palladium, Rhodium, Ruthenium oder Iridium sowie für eine Mischung aus den vorgenannten Metallen der Platingruppe.

Ein drittes Ausführungsbeispiel zur Herstellung eines dreidimensionalen Körpers mittels eines additiven Fertigungsverfahrens basiert auf einem Pulver einer Silberlegierung. Im hier beschriebenen Ausführungsbeispiel wird eine Silberlegierung verwendet, die zwischen 92,5-93,5 Gew.-% Silber und als Rest Kupfer enthält. Die bei den vorstehenden Ausführungsbeispielen beschriebenen Vorteile ergeben sich auch hier. Das beschriebene Verfahren eignet sich daher auch zur additiven Fertigung eines dreidimensionalen Körpers aus silberhaltigen Pulvern.

Den drei vorstehend beschriebenen Ausführungsbeispielen ist gemeinsam, dass jeweils ein Laser mit einer Wellenlänge von 535 nm bzw. 515 nm verwendet wurde. Das beschriebene Verfahren ist aber nicht auf diese Wellenlänge beschränkt. Diese ist zwar vorteilhaft, aber nicht zwingend. Mögliche bei dem beschriebenen Verfahren zur additiven Fertigung verwendbare Wellenlängen des Lasers liegen in einem Bereich zwischen 490 nm und 570 nm, also im Bereich des sichtbaren grünen Lichts, vorzugsweise in einem Bereich zwischen 500 nm und 560 nm, weiter vorzugsweise in einem Bereich zwischen 515 nm und 535 nm, und betragen weiter vorzugsweise 515 nm oder 535 nm.

Zusammenfassend ist festzuhalten, dass durch das beschriebene Verfahren sowie die Verwendung von gold- oder silberhaltigen Pulvern oder Pulvern, die eines oder mehrere Platingruppenmetalle enthalten, in vorteilhafter Art und Weise dreidimensionale Körper, insbesondere mit einer komplexen Geometrie, herstellbar sind, welche sich durch eine hohe Dichte von größer gleich 99,9 Vol.-% des massiven Körpers auszeichnen, wobei vorzugsweise die maximale Defektgröße kleiner gleich 30 µm ist. Da es die erfindungsgemäßen Maßnahmen erlauben, auf den Einsatz von Additiven zur Verbesserung der Energieabsorption zu verzichten, treten keine Farbabweichungen gegenüber der zugrundeliegenden Standardlegierung auf und eine Validierung der verwendeten Pulver ist ebenfalls nicht erforderlich. Ein weiterer Vorteil der erfindungsgemäßen Maßnahmen ist, dass keine aufwendige Nachbearbeitung erforderlich ist. Das erfindungsgemäße Verfahren erlaubt somit in vorteilhafter Art und Weise eine effiziente Fertigung von dreidimensionalen Körpern aus edelmetallhaltigen Pulvern. Dies ist insbesondere in der Schmuck- und Uhrenindustrie sowie bei der Herstellung von hochwertigen Schreibgeräten von Vorteil.

Das beschriebene Verfahren ist aber nicht nur in der Schmuck- und Uhrenindustrie und allgemein in der Luxusgüterindustrie verwendbar, sondern eignet sich auch für technische Anwendungen, insbesondere im Bereich der Dentaltechnik, der Messtechnik oder der Medizin, um nur einige Beispiele für derartige technische Anwendungsbereiche zu nennen.

## Patentansprüche

1. Verfahren zur Herstellung eines dreidimensionalen Körpers aus einem edelmetallhaltigen Pulver, bei dem eine Pulverschicht auf einen Träger aufgetragen und mittels eines Lasers selektiv derjenige Bereich der aufgetragenen Pulverschicht, die der jeweiligen Schichtgeometrie des herzustellenden Körpers entspricht, aufgeschmolzen wird, und bei dem sukzessive weitere Pulverschichten des edelmetallhaltigen Pulvers aufgetragen und diejenigen Bereiche der aufgetragenen Pulverschicht, die der jeweiligen Schichtgeometrie des herzustellenden dreidimensionalen Körpers entsprechen, aufgeschmolzen werden, **dadurch gekennzeichnet, dass** zum selektiven Aufschmelzen mindestens einer und vorzugsweise aller Pulverschichten ein Laser verwendet wird, dessen Laserstrahl eine Wellenlänge zwischen 490 nm und 570 nm, vorzugsweise zwischen 500 nm und 560 nm, weiter vorzugsweise zwischen 515 nm bis 535 nm und insbesondere vorzugsweise 515 nm oder 535 nm besitzt.

2. Verfahren nach einem der vorangehenden Ansprüche, **dadurch gekennzeichnet, dass** die Pulverschicht ein Pulver, aus einem silberhaltigen Metall oder einem goldhaltigen Metall enthält.

3. Verfahren nach einem der vorangehenden Ansprüche, **dadurch gekennzeichnet, dass** die Pulverschicht ein Pulver aufweist, welches Palladium, Platin, Rhodium, Ruthenium und/oder Iridium enthält.

4. Verwendung eines edelmetallhaltigen Pulvers zur Herstellung eines dreidimensionalen Körpers mittels eines additiven Fertigungsverfahrens gemäß einem der vorangehenden Ansprüche, **dadurch gekennzeichnet, dass** das Pulver Gold, Silber, Platin, Palladium, Rhodium, Ruthenium und/oder Iridium enthält.

5. Verwendung eines edelmetallhaltigen Pulvers gemäß dem vorangehenden Anspruch, **dadurch gekennzeichnet, dass** Gold in einem Anteil von 75 Gew.-% oder 58 Gew.-% oder Platin oder mindestens ein Platingruppenmetall in einem Anteil von 85 Gew.-% oder 95 Gew.-% oder Silber in einem Anteil von 92,5 bis 93,5 Gew.-% enthalten ist.

6. Dreidimensionaler Körper, der aus einem edelmetallhaltigen Pulver hergestellt ist, **dadurch gekennzeichnet, dass** zur Herstellung des Körpers ein Verfahren nach einem der Ansprüche 1 bis 3 eingesetzt ist.

7. Dreidimensionaler Körper nach Anspruch 6, **dadurch gekennzeichnet, dass** die Dichte des Körpers größer gleich 99,9 Vol.-% ist.
